**Europäisches Patentamt**

**European Patent Office**

**Office européen des brevets**

(11) Publication number: **0 455 277 B1**

# EUROPEAN PATENT SPECIFICATION

(45) Date of publication of patent specification: **08.03.95**  (51) Int. Cl.⁶: **C04B 35/58**

(21) Application number: **91113211.6**

(22) Date of filing: **27.06.86**

(60) Publication number of the earlier application in accordance with Art.76 EPC: **0 207 465**

(54) **Aluminum nitride sintered body and preparation thereof.**

(30) Priority: **28.06.85 JP 140166/85**
**25.09.85 JP 211401/85**
**25.09.85 JP 211403/85**
**21.01.86 JP 9010/86**

(43) Date of publication of application:
**06.11.91 Bulletin 91/45**

(45) Publication of the grant of the patent:
**08.03.95 Bulletin 95/10**

(84) Designated Contracting States:
**DE FR GB**

(56) References cited:
**EP-A- 0 075 857**
**EP-A- 0 114 193**

(73) Proprietor: **KABUSHIKI KAISHA TOSHIBA**
**72, Horikawa-cho**
**Saiwai-ku**
**Kawasaki-shi**
**Kanagawa-ken 210 (JP)**

(72) Inventor: **Kasori, Mituo, c/o Kabushiki Kaisha**
**Toshiba**
**72, Horikawacho**
**Kawasaki-shi,**
**Kanagawa-ken (JP)**
Inventor: **Shinozaki, Kazuo, c/o Kabushiki**
**Kaisha Toshiba**
**72, Horikawacho**
**Kawasaki-shi,**
**Kanagawa-ken (JP)**
Inventor: **Anzai, Kazuo, c/o Kabushiki Kaisha**
**Toshiba**
**72, Horikawacho**
**Kawasaki-shi,**
**Kanagawa-ken (JP)**
Inventor: **Tsuge, Akihiko, c/o Kabushiki**
**Kaisha Toshiba**
**72, Horikawacho**
**Kawasaki-shi,**
**Kanagawa-ken (JP)**
Inventor: **Imagawa, Hiroshi, c/o Kabushiki**
**Kaisha Toshiba**
**72, Horikawacho**
**Kawasaki-shi,**
**Kanagawa-ken (JP)**
Inventor: **Takano, Takeshi, c/o Kabushiki**
**Kaisha Toshiba**
**72, Horikawacho**
**Kawasaki-shi,**
**Kanagawa-ken (JP)**

Rank Xerox (UK) Business Services
(3.10/3.09/3.3.3)

Inventor: **Ueno, Fumio, c/o Kabushiki Kaisha Toshiba**
**72, Horikawacho**
**Kawasaki-shi,**
**Kanagawa-ken (JP)**
Inventor: **Horiguchi, Akihiro, c/o Kabushiki Kaisha Toshiba**
**72, Horikawacho**
**Kawasaki-shi,**
**Kanagawa-ken (JP)**
Inventor: **Inoue, Hiroshi, c/o Kabushiki Kaisha Toshiba**
**72, Horikawacho**
**Kawasaki-shi,**
**Kanagawa-ken (JP)**

(74) Representative: **Hansen, Bernd, Dr.**
**Dipl.-Chem. et al**
**Hoffmann, Eitle & Partner**
**Patent- und Rechtsanwälte,**
**Postfach 81 04 20**
**D-81904 München (DE)**

**Description**

The present invention relates to a sintered body of aluminum nitride and a process for preparing the same, more particularly to a sintered body of aluminum nitride which is dense and excellent in thermal conductivity and a process for preparing the same.

Since aluminum nitride (AℓN) deteriorates little in strength and is exellent in chemical resistance, it is used on one hand as a heat-resistant material, and on the other hand is considered to be promising as a material for heat dissipating boards of semiconductor devices through the utilization of its properties of high thermal conductivity and good electrical insulation. AℓN having the above-described properties usually has no melting point and decomposes at a high temperature of not lower than 2200 °C, and therefore, it is used in the form of a sintered body except for the use as thin films.

Said AℓN sintered body is usually prepared by molding and sintering an AℓN powder. However, when the AℓN powder is used singly, sinterability thereof is not good, and therefore, it is impossible to obtain a sintered body which is dense or has a high density except for the case where the hot pressing method is employed. Therefore, in the case of sintering under atmospheric pressure, it is generally practiced to add an oxide of a rare earth metal or an oxide of an alkaline earth metal as a sintering aids to the AℓN powder for the purpose of making sintered body denser.

Such an addition of a sintering aids has certainly improved the density of the sintered body to a considerable degree. However, on the other hand, up to today, the thermal conductivity of such AℓN sintered bodies has been lower than that of expected due to the presence of oxygen and other impurities and of boundary area of AℓN crystal particles. Namely, there is a problem that theoretical thermal conductivity of AℓN is 320 W/m•k, whereas that of an AℓN sintered body is 40 W/m•k at highest.

EP-A-0 075 857 discloses a sintered aluminium body which comprises aluminium nitride, an alkaline earth metal oxide and carbon powder. The alkaline earth metal oxide may be contaminated with titanium or zirconium.

Therefore, for the purpose of improving thermal conductivity of AℓN sintered bodies, various kinds of attempts have been made. However, no AℓN sintered bodies which are satisfactory enough have been obtained.

SUMMARY OF THE INVENTION

An object of the present invention is to provide an AℓN sintered body having a hgih density and a high thermal conductivity and a process for preparing the same by solving the above-described problems that have existed heretofore.

In order to attain this object, the present inventors have investigated extensively into the relationships of sintering additives to be added to AℓN powders and to densities and thermal conductivities of the resulting sintered bodies, which led to the following findings.

Namely, there has been found the fact that if sintering is carried out by adding to an AℓN powder, a transition element of Groups IVa, Va, VIa, VIIa and VIII of the periodic table or a compound containing the above elements, as a sintering aids, together with a compound of an alkaline earth metal, it becomes possilble to sinter at a lower temperature than would be the case with conventional processes where an oxide of alkaline earth metal is added singly, and the resulting AℓN sintered body is dense and has a high thermal conductivity.

Namely, the aluminum nitride sintered body of the present invention comprises;
(a) aluminum nitride,
(b) an aluminum compound of an alkaline earth metal selected from Ba, Ca and Sr, and
(c) at least one element selected from the transition elements consisting of Groups Va, VIa, VIIa and VIII of the periodic table, and/or at least one compound containing said element;
and the process for preparing the aluminum nitride sintered body comprises mixing aluminum nitride with;
(i) an alkaline earth metal compound; and
(ii) at least one of element selected from the group consisting of a transition element of Groups Va, VIa, VIIa and VIII of the periodic table, and/or at least one of a compound containing said element;
and then molding and sintering the mixture.

BRIEF DESCRIPTION OF THE DRAWINGS

Fig. 1 and Fig. 3 are characteristic diagrams showing the relationships of the sintering temperature of AℓN sintered bodies prepared in Examples 11 and 12 and Comparative Examples 11, 12 and 13 to the

3

densities thereof; and

Fig. 2 and Fig. 4, are characteristic diagrams showing the relationships of the sintering temperature of AℓN sintered bodies prepared in Examples 11 and 12 and Comparative Examples 11, 12 and 13, to the thermal conductivities thereof.

## DESCRIPTION OF THE PREFERRED EMBODIMENTS

The microscopic investigation of the AℓN sintered body of the present invention shows that in the boundary area of AℓN crystal particles, there are formed compounds such as an aluminum compound of an alkaline earth metal and/or an oxide of an aluminum compound of an alkaline earth metal and/or an oxyfluoride thereof, and compounds containing a transition element of Groups IVa, Va, VIa, VIIa and VIII in the periodic table.

In the AℓN sintered body described above, if said alkaline earth element is, e.g., calcium (Ca), there are produced compounds such as $6Aℓ_2O_3 \cdot CaO$, $2Aℓ_2O_3 \cdot CaO$, $Aℓ_2O_3 \cdot CaO$ and the like. Further, if said transition element or compound added is Zr or $ZrO_2$, the compounds containing said transition element become ZrN, or an unknown phase, etc., while if said transition element or compound is Ti or $TiO_2$, the compounds become TiN, an unknown phase, etc.

Further, in such AℓN sintered bodies, the composition ratio of the principal component, AℓN crystal particles, is preferably 80 to 99.98 % by weight relative to the whole. If this composition ratio is less than 80 % by weight, the characteristics of AℓN itself cannot be obtained sufficiently, whereas if the ratio exceeds 99.98 % by weight, it becomes difficult to allow the additives to achieve their effects sufficiently.

Next, the process for preparing an AℓN sintered body of the present invention is described hereinafter.

The gist of the preparative method of the present invention comprises mixing the principal component of aluminum nitride with, as a first additive, at least one compound including an alkaline earth metal, and as a second additive, at least one element selected from the group consisting of a transition element of Groups IVa, Va, VIa, VIIa and VIII in the periodic table or a compound containing the above elements; and then molding and sintering the mixture.

In the first place, as an AℓN powder, which is a principal component, the use of one which contains 0.001 to 7 % by weight of oxygen is particularly preferable, when sinterability and thermal conductivity being taken into account.

The alkaline earth metal contained in the first additive, are Ca, Sr and Ba. One kind or two or more kinds of these elements are added to said AℓN powder. As a compound of these elements, an oxide, a nitride, a fluoride, and a substance which is converted into a compound mentioned above by sintering are preferable. As a substance which is converted into e.g., an oxide by sintering, there may be mentioned a carbonate, a nitrate, an oxalate, a hydroxide, etc. of these elements.

Next, as a transition element contained in the second additive, any element may be used so long as it belongs to Groups IVa (Ti, Zr and Hf), Va (V, Nb and Ta), VIa (Cr, Mo and W) or VIIa (Mn and Re), or VIII (Fe, Co, Ni, Ru, Rh, Pd, Os, Ir and Pt), and as is the case with said first additive, one kind or two or more kinds of the above-mentioned elements is (or are) added to said AℓN powder as a compound powder. In addition, among these transition elements, the use of an element of Group VIa, i.e. Ti, Zr or Hf gives an AℓN sintered body which has not only a high density and a good thermal conductivity but also an extremely high strength. Among them, Zr and Ti are particularly preferred. On the other hand, among the above-mentioned transition elements, if one which belongs to the fourth period, or Ti, V, Cr, Mn, Fe, Co or Ni, is used, at a sintering temperature lower than conventional temperatures, e.g., at 1600 to 1650 °C, there can be produced an AℓN sintered body which has a high density and a good thermal conductivity.

The above-mentioned first and second additives are preferably added in the range of 0.01 to 18 % by weight and 0.01 to 15 % by weight, more preferably in the range of 0.01 to 15 % by weight and 0.01 to 10 % by weight, respectively, in terms of oxides of respective elements. In addition, the total amount of both the additives is preferably 0.02 to 20 % by weight, more preferably 0.02 to 18 % by weight. If the amounts of the additives are less than 0.01 % by weight for each of them, the additives do not exert their effects sufficiently, whereas the amounts are excessively great, not only the thermal resistance and the high strength property are deteriorated but also the thermal conductivity is lowered, which is not preferable. If the amount of the second additive is great, there is a danger of the electrical insulating properties of products being disadvantageously lowered.

All the average particle diameters of the AℓN powder and powders of the first and second additives are not more than 5 $\mu$m, preferably not more than 4 $\mu$m.

Hereinafter, an example of the process for preparing an AℓN sintered body of the present invention will be described.

EP 0 455 277 B1

In the first place, a powder composed of an alkaline earth metal compound described above, and at least one element selected from the group consisting of Groups IVa to VIII in the periodic table or a compound containing the above elements is added, as sintering additive, to an AℓN powder, in a predetermined amount, followed by blending using a ball mill, etc. For sintering, the atmospheric pressure sintering method, the hot pressing method, etc. can be employed. When the atmospheric pressure sitnering method is employed, a binder is added to the powder mixture, and the resulting mixture is kneaded, granulated, sized, and then molded. As a molding method, press-molding using a molding die, hydrostatic pressure press-molding, sheet forming, etc. can be applied. And then, a molded piece is heated under a stream of $N_2$ gas to remove the binder, followed by atmospheric pressure sintering. The sintering temperature is normally set at 1650 to 1800 °C, however, this depends on the kinds of additives used.

On the other hand, when the hot pressing method is employed, direct hot pressing of said material admixed using a ball mill, etc. may be employed.

Although the improving effect of the present invention on thermal conductivity of an AℓN sintered body and the lowering effect thereof on sintering temperature are unknown at present; however, the cause of enhanced thermal conductivity is presumed as follows.

Namely, a principal cause of enhancing the thermal conductivity is that in the AℓN sintered body of the present invention, the oxynitride of Aℓ (AℓON) and polytype of AℓN (27R type) are hard to be formed. The results of the research by the present inventors show that all the sintered bodies in which AℓON and 27R type are formed are low in thermal conductivity.

The formation of AℓON and 27R type is influenced by the purity of AℓN powder, atmosphere in a sintering furnace, and the kind and amount to be added of sintering aids. However, comparison of the sintered bodies prepared using the same AℓN powder and under the same experimental conditions shows that compared with the case where a conventional oxide of a rare earth metal and an oxide of an alkaline earth metal are added, the sintered body of the present invention has evidently less or no AℓON and 27 R type formed therein.

On the other hand, the lowering of sintering temperature is presumably caused by the fact that in the present invention, sintering proceeds by producing liduid phase at a lower temperature than when an oxide of a rare earth metal or an oxide of an alkaline earth metal are added singly.

Further, the sintered body of the present invention is colored by incorporating a transition element which is the second additive, and moreover, the tone can be varied depending the kinds of elements to be added, amounts and combinations thereof. Namely, in general, the molar ratio of Aℓ/N in an AℓN material is not necessarily 1, and in many cases, rich in Al. Therefore, when such a material is used, the color of a sintered body becomes grey or black. In addition, usually, the richer in Aℓ the material is, the more the blackening proceeds on one hand and the lower the thermal conductivity becomes on the other hand. Accordingly, the closer to 1 the molar ratio of Aℓ/N in an AℓN material is and the less amounts of impurities are contained therein, the higher the thermal conductivity becomes and the whiter or translucent sintered bodies are obtained. Namely, conventionally, if the preparation of a sintered body of a higher conductivity is attempted, the color of the resulting sintered body is necessarily white or translucent, while the preparation of a colored sintered body is attempted, thermal conductivity is lowered. In contrast, according to the present invention, the simultaneous addition of an alkaline earth metal and a transition metal makes it possible to prepare a sintered body having various colors by suitably selecting the kind or combination of elements to be added while preserving a high thermal conductivity through the use of an AℓN material of which the molar ratio of Aℓ/N is close to 1 and which has a small amount of impurities. For example, the addition of $Cr_2O_3$, etc. develops a dark grey color, whereas the addition of $TiO_2$ develops a brown color. On the other hand, the simultaneous addition of $TiO_2$ and $Cr_2O_3$ gives a dark grey to a black sintered body. Thus, according to the present invention, it is possible to prepare an AℓN sintered body showing a desired color. The AℓN sintered body thus colored has such advantages as being higher in thermal emissivity, whereby the property of heat dissipation is further improved, a light which becomes a factor of an error of a semiconductor circuit is shielded and being able to avoid sintering uneveness, etc. during preparation by coloring, whereby the appearance of products can be enhanced.

EXAMPLES

Reference Example 1

To an AℓN powder containing 3.6 % by weight of oxygen as an impurity, and having an average particle diameter of 2.2 μm, there were added, as a first additive, 3 % by weight of $Y_2O_3$ having an average particle diameter of 2.5 μm and, as a second additive, 0.5 % by weight of $ZrO_2$ having an average particle

5

diameter of 3 $\mu$m, and the mixture was ground and admixed using a ball mill to prepare a material. Next, to this material, there was added 7 % by weight of paraffin as a binder and the resulting mixture was granulated, followed by press-molding the resulting granule under a pressure of 300 kg/cm$^2$ to prepare a green compact of 50 x 50 x 8 mm. This green compact was heated up to 700 °C under an atmosphere of nitrogen gas to remove the paraffin. Further, the resulting compact was placed in a container made of carbon, and under nitrogen gas atmosphere, subjected to atmospheric pressure sintering at 1800 °C for 2 hours. The density of the resulting AℓN sintered body was measured. Further, a disc having a diameter of 10 mm and a thickness of 2.5 mm was prepared by grinding from the sintered body, and the thermal conductivity was measured by laser-flash method using the disc as a specimen.

On the other hand, six square bars having a width of 4 mm, a thickness of 3 mm and a length of 40 mm were prepared by grinding from the sintered body obtained, and the three-point bending strength was measured using the square bars as specimen for measuring bending strength, under the condition of a supporting-points-distance of 20 mm, and a crosshead velocity of 0.5 mm/min.

Reference Example 2

In the first place, to an AℓN powder containing 3.6 % by weight of oxygen as an impurity and having an average particle diameter of 2.2 $\mu$m, there were added 1.5 % by weight of TiO$_2$ having an average particle diameter of 2.8 $\mu$m, as a first additive, and 1.5 % by weight of Y$_2$O$_3$ powder having an average particle diameter of 2.5 $\mu$m, as a second additive, and the resulting mixture was ground and mixed by a ball mill to prepare a material. And then, 7 % by weight of paraffin was added to this material, and the resulting material was granulated, followed by press-molding the granules under a pressure of 500 kg/cm$^2$ into a green compact of 30 x 30 x 8 mm. Next, this green compact was heated up to 700 °C under nitrogen atmosphere to remove the paraffin. Then, the resulting green compact was received into a carbon container, and subjected to atmospheric pressure sintering under nitrogen gas atmosphere, at 1700 °C for 2 hours to prepare an AℓN sintered body.

And as to the resulting sintered body, similarly to Reference Example 1, the density and thermal conductivity are shown in Table 3.

Examples 1 to 8 and Comparative Examples 1 to 5

By changing the kind of AℓN powder and the kind of additive powder variously, AℓN sintered bodies were prepared similarly to the above-described Reference Example 2, followed by measuring respective densities and thermal conductivities. The results are shown in Table 3, together with the particle diameter and oxygen content of each AℓN powder, the kind of additives, particle diameter and amount to be added of each additive.

## Table 3

| | AℓN powder | | | First additive | | | Second additive | | |
|---|---|---|---|---|---|---|---|---|---|
| | Average particle diameter (μm) | Oxygen content (% by weight) | Composition (% by weight) | Kind | Average particle diameter (μm) | Composition (% by weight) | Kind | Average particle diameter (μm) | Composition (% by weight) |
| Example 1 | 2.2 | 3.6 | 97.0 | CaO | 2.0 | 1.5 | NiO | 2.5 | 1.5 |
| Example 2 | 2.2 | 3.6 | 98.0 | BaO | 2.3 | 1.0 | NiO | 2.5 | 1.0 |
| Example 3 | 2.2 | 3.6 | 97.0 | SrO | 2.3 | 1.5 | NiO | 2.5 | 1.5 |
| Example 4 | 1.2 | 1.4 | 98.0 | $BaF_2$ | 2.5 | 1.0 | Ni | 3.5 | 1.0 |
| Example 5 | 1.2 | 1.4 | 98.0 | $CaF_2$ | 2.5 | 1.0 | NiO | 2.5 | 1.0 |
| Example 6 | 2.2 | 3.6 | 95.0 | CaO | 2.0 | 3.5 | CoO | 2.5 | 1.5 |
| Example 7 | 2.2 | 3.6 | 93.0 | CaO | 2.0 | 5.6 | $Cr_2O_3$ | 2.0 | 1.4 |

EP 0 455 277 B1

EP 0 455 277 B1

Table 3 (Contd)

| | AlN powder | | | First additive | | | Second additive | | |
|---|---|---|---|---|---|---|---|---|---|
| | Average particle diameter (μm) | Oxygen content (% by weight) | Composition (% by weight) | Kind | Average particle diameter (μm) | Composition (% by weight) | Kind | Average particle diameter (μm) | Composition (% by weight) |
| Example 8 | 1.2 | 1.4 | 95.0 | BaO | 2.3 | 3.0 | $Fe_2O_3$ | 2.0 | 2.0 |
| Comparative example 1 | 2.2 | 3.6 | 100.0 | – | – | – | – | – | – |
| Comparative example 2 | 2.2 | 3.6 | 97.0 | $Y_2O_3$ | 2.5 | 3.0 | – | – | – |
| Comparative example 3 | 2.2 | 3.6 | 97.0 | – | – | – | $TiO_2$ | 2.8 | 3.0 |
| Comparative example 4 | 2.2 | 3.6 | 97.0 | – | – | – | NiO | 2.5 | 3.0 |
| Comparative example 5 | 2.2 | 3.6 | 97.0 | CaO | 2.0 | 3.0 | – | – | – |

Table 3 (Contd)

| | Density (g/cm$^3$) | Thermal conductivity (W/m·k) |
|---|---|---|
| Example 1 | 3.27 | 70 |
| Example 2 | 3.28 | 69 |
| Example 3 | 3.28 | 70 |
| Example 4 | 3.26 | 92 |
| Example 5 | 3.27 | 95 |

Table 3 (Contd)

| | Density (g/cm$^3$) | Thermal conductivity (W/m·k) |
|---|---|---|
| Example 6 | 3.29 | 85 |
| Example 7 | 3.33 | 86 |
| Example 8 | 3.30 | 76 |
| Comparative example 1 | 2.12 | 8 |
| Comparative example 2 | 2.64 | 20 |
| Comparative example 3 | 2.30 | 15 |
| Comparative example 4 | 2.64 | 20 |
| Comparative example 5 | 2.78 | 26 |

Example 9

By changing the kind of AℓN powder and kind of sintering additive powder, an AℓN sintered body was prepared similarly to the above-mentioned Reference Example 2, and respective densities and thermal conductivities were measured similarly. The results are shown in Table 4, together with the particle diameter and oxygen content of each AℓN powder, and the kind and amount to be added of each sintering additive.

Table 4

| | AℓN powder | | | Additive | | density (g/cm3) | Thermal conductivity (W/m·k) |
|---|---|---|---|---|---|---|---|
| | Average particle diameter (μm) | Oxygen content (% by weight) | Composition (% by weight) | Composition of additive | Added amount (% by weight) | | |
| Example 9 | 2.2 | 3.6 | 95.0 | BaO:CaF$_2$:Ni=2:1:2 | 5.0 | 3.31 | 69 |

<u>Reference Example 3</u>

To the AℓN powder used in Reference Example 1, there were added 1.5 % by weight of Y$_2$O$_3$ having an average particle diameter of 2.5 μm and 1.5 % by weight of NiO having an average particle diameter of

EP 0 455 277 B1

2.5 $\mu$m, and the mixture was ground and mixed using a ball mill to prepare a material. Next, the material powder was press-molded under a pressure of 500 kg/cm$^2$ into a green compact having a diameter of 12 mm and a thickness of 10 mm. And then, the green compact was placed in a carbon die and sujected to hot pressing sintering under nitrogen gas atmosphere at a temperature of 1700 °C and under a pressure of 400 kg/cm$^2$ for one hour. Similarly to Reference Example 1, the density and thermal conductivity of the resulting sintered body were measured.

Example 10 and Comparative Examples 6 to 10

By changing the kind of A$\ell$N powder and the kind of sintering additive powder variously, A$\ell$N sintered bodies were prepared similarly to the above-mentioned Reference Example 3, followed by measuring respective densities and thermal conductivities. The results are shown in Table 5, together with the particle diameter and oxygen content of each A$\ell$N powder, the kind of additives, particle diameter and amount to be added of each additive.

## Table 5

| | AℓN powder | | | First additive | | | Second additive | | |
|---|---|---|---|---|---|---|---|---|---|
| | Average particle diameter (µm) | Oxygen content (% by weight) | Composition (% by weight) | Kind | Average particle diameter (µm) | Composition (% by weight) | Kind | Average particle diameter (µm) | Composition (% by weight) |
| Example 10 | 2.2 | 3.6 | 97.0 | CaO | 2.0 | 2.1 | $Fe_2O_3$ | 2.0 | 0.9 |
| Comparative example 6 | 2.2 | 3.6 | 100.0 | - | - | - | - | - | - |
| Comparative example 7 | 2.2 | 3.6 | 97.0 | CaO | 2.0 | 3.0 | - | - | - |
| Comparative example 8 | 2.2 | 3.6 | 97.0 | $Y_2O_3$ | 2.5 | 3.0 | - | - | - |
| Comparative example 9 | 2.2 | 3.6 | 97.0 | - | - | - | NiO | 2.5 | 3.0 |
| Comparative example 10 | 2.2 | 3.6 | 97.0 | - | - | - | $TiO_2$ | 2.8 | 3.0 |

EP 0 455 277 B1

12

Table 5 (Contd)

|  | Density (g/cm$^3$) | Thermal conductivity (W/m·k) |
|---|---|---|
| Example 10 | 3.27 | 65 |
| Comparative example 6 | 3.30 | 29 |
| Comparative example 7 | 3.27 | 45 |
| Comparative example 8 | 3.27 | 45 |
| Comparative example 9 | 3.29 | 42 |
| Comparative example 10 | 3.27 | 32 |

Reference Example 4

In the first place, to an AℓN powder containing 1.4 % by weight of oxygen as an impurity and having an average particle diameter of 1.2 $\mu$m, there were added 5 % by weight of mixed powder of $TiO_2$ and $Y_2O_3$ - (weight ratio = 1 : 1), and the resulting mixture was ground and mixed by ball mill to prepare a material. And then, 7 % by weight of paraffin was added to this material, and the resulting material was granulated, followed by press-molding the granules under a pressure of 500 kg/cm$^2$ into green compacts of 30 x 30 x 8 mm. Next, these green compacts were heated up to 700 °C under nitrogen gas atmosphere to remove the paraffin. Then, the resulting green compacts were placed in a carbon container, and subjected to atmospheric pressure sintering under an atmosphere of nitrogen gas, at 1600 °C, 1650 °C, 1700 °C, 1750 °C and 1800 °C for 2 hours to prepare 5 kinds of AℓN sintered bodies.

Reference Example 5

To an AℓN powder used in Reference Example 4, there were added 4 % by weight of mixed powder of $TiO_2$ and $CaCO_3$ (weight ratio = 1 : 1; in terms of $TiO_2$ : CaO), and the resulting mixture was ground and mixed by ball mill to prepare a material. And then, 7 % by weight of paraffin was added to this material, and the resulting material was granulated, followed by press-molding the granules under a pressure of 500 kg/cm$^2$ into green compacts of 30 x 30 x 8 mm. Next, these green compacts were heated up to 700 °C under nitrogen gas atmosphere to remove the paraffin. Then, the resulting green compacts were placed in a carbon container, and subjected to atmospheric pressure sintering under nitrogen gas atmosphere at 1600 °C, 1650 °C, 1700 °C, 1750 °C and 1800 °C for 2 hours to prepare 5 kinds of AℓN sintered bodies.

Comparative example 11

Five kinds of AℓN sintered bodies were prepared similarly to Reference Example 5 except for the use of a material prepared by adding 4 % by weight of $CaCO_3$ in terms of CaO to the same AℓN powder as used in the above-mentioned Reference Example 5.

Reference Example 6

Five kinds of AℓN sintered bodies were obtained by preparing green compacts and making sintered bodies at various temperatures similarly to Reference Example 4 except for the addition of 5 % by weight of mixed powder of NiO and $Y_2O_3$ (weight ratio = 1 : 1) to the same AℓN powder as used in Reference Example 4.

Comparative example 12

Five kinds of AℓN sintered bodies were prepared similarly to Reference Example 6 except for the use of a material prepared by adding 5 % by weight of NiO alone to the same AℓN powder as used in the above-mentioned Reference Example 6

Example 11

Five kinds of AℓN sintered bodies were prepared by sintering at various temperatures similarly to Reference Example 4 except for the use of a material prepared by adding 4 % by weight of mixed powder of NiO and $CaCO_3$ (weight ratio in terms of NiO : CaO = 1 : 1) to the same AℓN powder as used in the above-mentioned Reference Example 4.

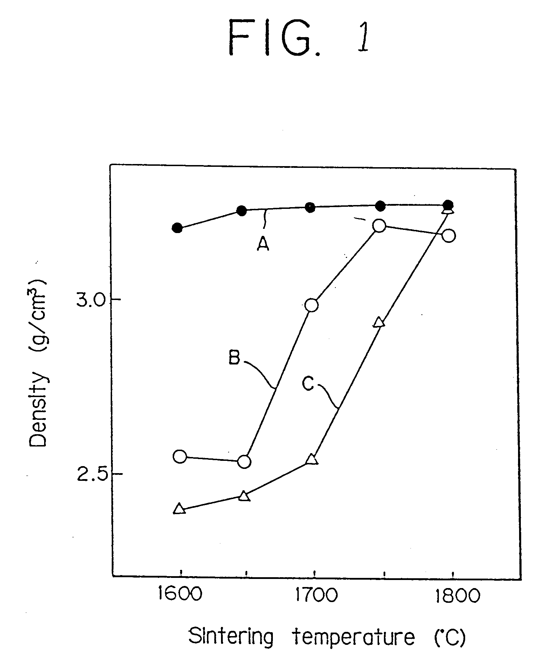

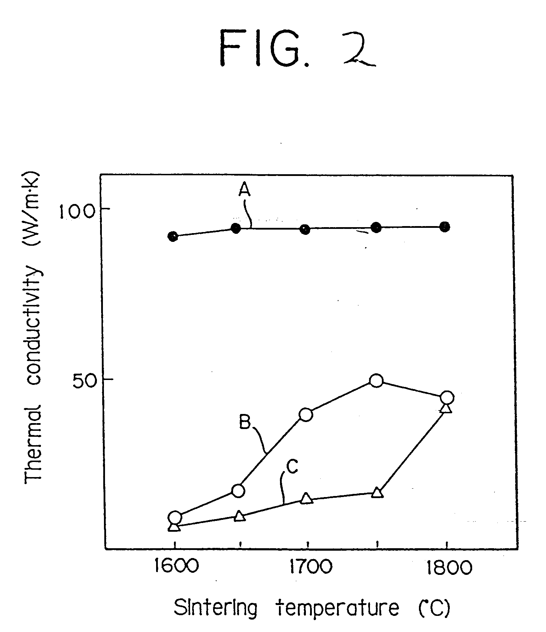

Then, as to the AℓN sintered bodies of Example 11 of the present invention and Comparative examples 11 and 12, the investigation of the relationships of the densities and the thermal conductivities to the sintering temperature was carried out to give the characteristic drawings shown in Fig. 1 and Fig. 2. In addition, A in Fig. 1 or Fig. 2 is a characteristic curve of Example 11 of the present invention, B is a characteristic curve of Comparative example 11, and C is a characteristic curve of Comparative example 12, respectively.

As is clear from Fig. 1 and Fig. 2, in the AℓN sintered bodies of the present invention, enhanced densities and increased thermal conductivities can be attained at lower sintering temperatures, and the manufacturing costs thereof can be controlled to lower levels than those of conventional AℓN sintered bodies.

Example 12

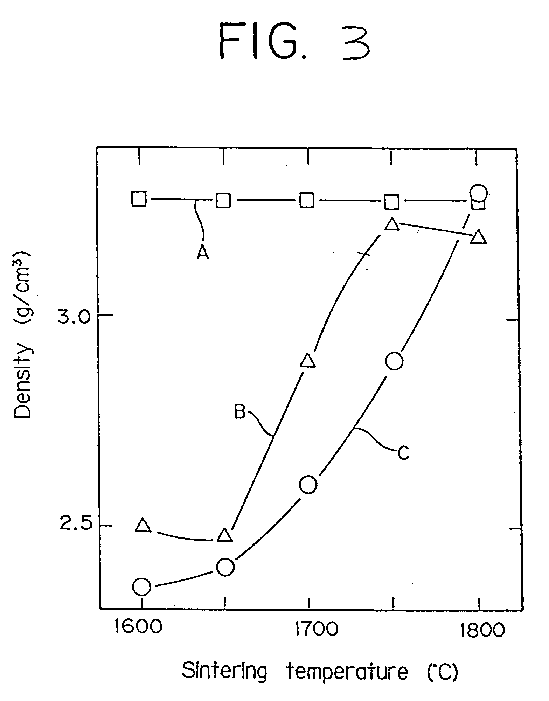

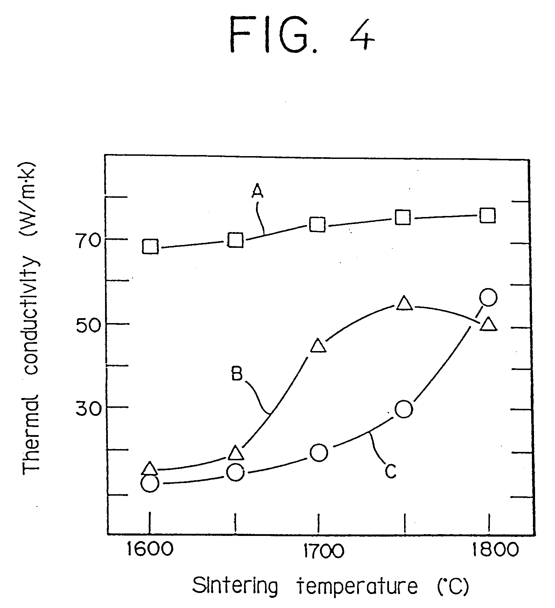

To an AℓN powder containing 2.4 % by weight of oxygen as an impurity and having an average particle diameter of 1.6 $\mu$m, there was added a mixed powder of $CaCO_3$ and $Fe_2O_3$ (weight ratio of $Fe_2O_3$ : CaO = 3 : 7) in the amount of 4 % by weight in terms of CaO + $Fe_2O_3$, and similarly to the above-mentioned Reference Example 4, the mixture was sintered at temperatures of 1600 °C, 1650 °C, 1700 °C, 1750 °C and 1800 °C, respectively, for 2 hours, and as to each of the resulting AℓN sintered bodies, the density and thermal conductivity thereof were measured, the results thereof being indicated by curve A in Fig. 3 and Fig. 4.

Comparative example 13

For the purpose of comparison, by using the material powder prepared by adding 7.14 % by weight (4.0 % by weight in terms of CaO) of $CaCO_3$ to the same AℓN powder as used in Example 12 and the material powder prepared by addition of 4 % by weight of $Y_2O_3$, sintering was carried out at respective temperatures in a similar manner as above, and the densities and thermal conductivities of the resulting sintered bodies were measured, the results thereof being indicated by curve B and curve C, respectively, in Fig. 3 and Fig. 4.

As is clear from Fig. 3 and Fig. 4, in the manufacture of the sintered bodies of the present invention, the sintering temperature can be lowered to a great extent, and a high density and a good conductivity can be achieved; therefore, the manufacturing cost thereof can be controlled to a lower level than those of conventional AℓN sintered bodies.

As is evident from the above description, the aluminum nitride sintered bodies of the present invention are excellent products having a high density and a good thermal conductivity. And depending on the additives to be added, particularly on the kind of transition element, said second additive, such properties as being extremely strong, being capable of being sintered at low temperatures, etc. can be given thereto. Further, depending on the kind of such transition elements and combination thereof, the present sintered bodies can be colored variously, which widens the range of use thereof as well as makes it possible to avoid lowering in yield thereof caused by non-uniformity in sintering, etc. Consequently, the industrial value thereof is extremely high and useful particularly for heat dissipating boards of semiconductor devices.

**Claims**

1.  An aluminum nitride sintered body which comprises;
    (a) aluminum nitride,

(b) an aluminum compound of an alkaline earth metal selected from Ba, Ca and Sr, and
(c) at least one element selected from the transition elements consisting of Groups Va, VIa, VIIa and VIII of the periodic table, and/or at least one compound containing said element.

2. The aluminum nitride sintered body according to Claim 1, wherein the content of aluminum nitride is 80 to 99.98% by weight.

3. The aluminum nitride sintered body according to Claim 1, wherein the content of the aluminum compound of an alkaline earth metal is 0.01 to 18% by weight in terms of the oxide of the alkaline earth metal.

4. The aluminum nitride sintered body according to Claim 1, wherein the content of the compound containing at least one kind of element selected from the group consisting of the transition elements of Groups Va, VIa, VIIa and VIII of the periodic table is 0.01 to 15% by weight in terms of the oxide of said element.

5. The aluminum nitride sintered body according to Claim 1, wherein said transition elements of Groups Va, VIa, VIIa and VIII are at least one selected from the group of Ni, Cr, Mn, Fe, Co and V.

6. The aluminum nitride sintered body according to Claim 1, wherein the aluminum compound of an alkaline earth metal is an oxide and/or an oxyfluoride.

7. A process of preparing an aluminum nitride sintered body which comprises mixing aluminum nitride with;
    (i) an alkaline earth metal compound; and
    (ii) at least one of element selected from the group consisting of a transition element of Groups Va, VIa, VIIa and VIII of the periodic table, and/or at least one of a compound containing said element;
     and then molding and sintering the mixture.

8. The process of preparing an aluminum nitride sintered body according to Claim 7, wherein the total content of the alkaline earth metal compound is 0.01 to 18% by weight in terms of the oxide of said alkaline earth metal.

9. The process of preparing an aluminum nitride sintered body according to Claim 7, wherein the total content of a transition element of Groups Va, VIa, VIIa and VIII, or a compound containing said element is 0.01 to 15% by weight in terms of oxide of said element.

10. The process of preparing an aluminum nitride sintered body according to Claim 7, wherien said compound of an alkaline earth metal is an oxide, a nitride, a fluoride, or a substance which is converted into a compound of these kinds by sintering, or a combination thereof.

11. The process of preparing an aluminum nitride sintered body according to Claim 7, wherein said compounds containing a transition element of Groups Va, VIa, VIIa and VIII of the periodic table is an oxide, a nitride, a fluoride, or a substance which is converted into a compound of these kinds by sintering, or a combination thereof.

12. The process of preparing an aluminum nitride sintered body according to Claim 7, wherein said aluminum nitride contains 0.001 to 7% by weight of oxygen.

13. The process of preparing an aluminum nitride sintered body according to Claim 7, wherein the average particle diameter of a powder used for sintering is not larger than 5 $\mu$m.

14. The process of preparing an aluminum nitride sintered body according to claim 7, wherein said transition element of Groups Va, VIa, VIIa and VIII of the periodic table is at least one of element selected from the group of Ni, Cr, Mn, Fe, Co and V.

15. The process of preparing an aluminium nitride sintered body according to claim 7, the body having a thermal conductivity of at least 65 W/m.k.

**Patentansprüche**

1. Aluminiumnitrid-Sinterkörper, welcher umfaßt:
   (a) Aluminiumnitrid,
   (b) eine Aluminium-Verbindung eines Erdalkalimetalls, ausgewählt aus Ba, Ca und Sr, und
   (c) mindestens ein Element, ausgewählt aus den Übergangselementen der Gruppen Va, VIa, VIIa und VIII des Periodensystems, und/oder mindestens eine Verbindung, die ein solches Element enthält.

2. Aluminiumnitrid-Sinterkörper gemäß Anspruch 1, worin der Aluminiumnitrid-Gehalt 80 bis 99,98 Gew.% beträgt.

3. Aluminiumnitrid-Sinterkörper gemäß Anspruch 1, worin der Gehalt der Aluminium-Verbindung eines Erdalkalimetalls 0,01 bis 18 Gew.%, ausgedrückt als Oxid des Erdalkalimetalls, beträgt.

4. Aluminiumnitrid-Sinterkörper gemäß Anspruch 1, worin der Gehalt der Verbindung, die mindestens eine Elementart, ausgewählt aus der Gruppe bestehend aus den Übergangselementen der Gruppen Va, VIa, VIIa und VIII des Periodensystems enthält, 0,01 bis 15 Gew.%, berechnet als das Oxid dieses Elements, beträgt.

5. Aluminiumnitrid-Sinterkörper gemäß Anspruch 1, worin die Übergangselemente der Gruppen Va, VIa, VIIa und VIII mindestens ein Element sind, das aus der Gruppe aus Ni, Cr, Mn, Fe, Co und V ausgewählt wird.

6. Aluminiumnitrid-Sinterkörper gemäß Anspruch 1, worin die Aluminium-Verbindung eines Erdalkalimetalls ein Oxid und/oder ein Oxyfluorid ist.

7. Verfahren zur Herstellung eines Aluminiumnitrid-Sinterkörpers, umfassend die Mischung von Aluminiumnitrid mit:
   (i) einer Erdalkalimetall-Verbindung; und
   (ii) mindestens einem Element, ausgewählt aus der Gruppe bestehend aus Übergangselementen der Gruppe Va, VIa, VIIa und VIII des Periodensystems, und/oder mindestens einer Verbindung, die dieses Element enthält;
   und dann Formung und Sinterung der Mischung.

8. Verfahren zur Herstellung eines Aluminiumnitrid-Sinterkörpers gemäß Anspruch 7, worin der Gesamtgehalt der Erdalkalimetall-Verbindung 0,01 bis 18 Gew.%, berechnet als das Oxid dieses Erdalkalimetalls, beträgt.

9. Verfahren zur Herstellung eines Aluminiumnitrid-Sinterkörpers gemäß Anspruch 7, worin der Gesamtgehalt eines Übergangselements der Gruppen Va, VIa, VIIa und VIII oder einer Verbindung, die dieses Element enthält, 0,01 bis 15 Gew.%, berechnet als das Oxid dieses Elements, beträgt.

10. Verfahren zur Herstellung eines Aluminiumnitrid-Sinterkörpers gemäß Anspruch 7, worin die erwähnte Erdalkalimetall-Verbindung ein Oxid, ein Nitrid, ein Fluorid oder eine Substanz, die in eine Verbindung dieser Arten durch Sinterung umgewandelt wird, oder eine Kombination daraus ist.

11. Verfahren zur Herstellung eines Aluminiumnitrid-Sinterkörpers gemäß Anspruch 7, worin diese Verbindungen, die ein Übergangselement der Gruppen Va, VIa, VIIa und VIII des Periodensystems enthalten, ein Oxid, ein Nitrid, ein Fluorid oder eine Substanz, die in eine Verbindung dieser Arten durch Sintern umgewandelt wird, oder eine Kombination daraus sind.

12. Verfahren zur Herstellung eines Aluminiumnitrid-Sinterkörpers gemäß Anspruch 7, wobei dieses Aluminiumnitrid 0,001 bis 7 Gew.% Sauerstoff enthält.

13. Verfahren zur Herstellung eines Aluminiumnitrid-Sinterkörpers gemäß Anspruch 7, wobei der mittlere Partikeldurchmesser eines Pulvers, das zum Sintern verwendet wird, nicht mehr als 5 um beträgt.

**14.** Verfahren zur Herstellung eines Aluminiumnitrid-Sinterkörpers gemäß Anspruch 7, worin das Übergangselement der Gruppen Va, VIa, VIIa und VIII des Periodensystems mindestens ein Element, ausgewählt aus der Gruppe aus Ni, Cr, Mn, Fe, Co und V, ist.

**15.** Verfahren zur Herstellung eines Aluminiumnitrid-Sinterkörpers gemäß Anspruch 7, wobei der Körper eine Wärmeleitfähigkeit von mindestens 65 W/m•K hat.

**Revendications**

**1.** Corps fritté en nitrure d'aluminium comprenant
(a) du nitrure d'aluminium,
(b) un composé d'aluminium d'un métal alcalino-terreux choisi parmi Ba, Ca et Sr, et
(c) au moins un élément choisi parmi les éléments de transition des groupes Va, VIa, VIIa et VIII de la classification périodique des éléments, et/ou au moins un composé contenant ledit élément.

**2.** Corps fritté en nitrure d'aluminium conforme à la revendication 1 dans lequel la teneur en nitrure d'aluminium est comprise entre 80 et 99,98 % en poids.

**3.** Corps fritté en nitrure d'aluminium conforme à la revendication 1 dans lequel la teneur du composé d'aluminium d'un métal alcalino-terreux est comprise entre 0,01 et 18 % en poids en termes d'oxyde du métal alcalino-terreux.

**4.** Corps fritté en nitrure d'aluminium conforme à la revendication 1 dans lequel la teneur du composé contenant au moins un élément choisi dans le groupe formé par les éléments de transition des groupes Va, VIa, VIIa et VIII de la classification périodique des éléments est comprise entre 0,01 et 15 % en poids en termes d'oxyde dudit élément.

**5.** Corps fritté en nitrure d'aluminium conforme à la revendication 1 dans lequel ledit élément de transition des groupes Va, VIa, VIIa et VIII estt au moins un des éléments du groupe formé par le Ni, Cr, Mn, Fe, Co et V.

**6.** Corps fritté en nitrure d'aluminium conforme à la revendication 1 dans lequel le composé d'aluminium d'un métal alcalino-terreux est un oxyde et/ou un oxyfluorure.

**7.** Procédé de préparation d'un corps fritté en nitrure d'aluminium comprenant le mélangeage de nitrure d'aluminium avec
(i) un composé de métal alcalino-terreux, et
(ii) au moins un élément choisi dans le groupe formé par les éléments de transition des groupes Va, VIa, VIIa et VIII de la classification périodique des éléments et/au au moins un composé contenant lesdits éléments,
et ensuite le moulage et le frittage du mélange.

**8.** Procédé de préparation d'un corps fritté en nitrure d'aluminium conforme à la revendication 7 dans lequel la teneur totale en composé de métal alcalino-terreux est comprise entre 0,01 et 18 % en poids en termes d'oxyde dudit métal alcalino-terreux.

**9.** Procédé de préparation d'un corps fritté en nitrure d'aluminium conforme à la revendication 7 dans lequel la teneur totale d'un élément de transition des groupes Va, VIa, VIIa et VIII ou d'un composé contenant ledit élément est comprise entre 0,01 et 15 % en poids en termes d'oxyde dudit élément.

**10.** Procédé de préparation d'un corps fritté en nitrure d'aluminium conforme à la revendication 7 dans lequel ledit composé d'un métal alcalino-terreux est un oxyde, un nitrure, un fluorure ou une substance qui peut être convertie en un composé de ce type par frittage, ou une combinaison de ceux-ci.

**11.** Procédé de préparation d'un corps fritté en nitrure d'aluminium conforme à la revendication 7 dans lequel lesdits composés contenant un élément de transition des groupes Va, VIa, VIIa et VIII de la classification périodique des éléments sont un oxyde, un nitrure, un fluorure ou une substance qui peut être convertie en un composé de ce type par frittage, ou une combinaison de ceux-ci.

**12.** Procédé de préparation d'un corps fritté en nitrure d'aluminium conforme à la revendication 7 dans lequel ledit nitrure d'aluminium contient de 0,001 à 7 % en poids d'oxygène.

**13.** Procédé de préparation d'un corps fritté en nitrure d'aluminium conforme à la revendication 7 dans lequel le diamètre moyen des particules d'une poudre utilisée pour le frittage n'est pas supérieur à 5 $\mu$m.

**14.** Procédé de préparation d'un corps fritté en nitrure d'aluminium conforme à la revendication 7 dans lequel ledit élément de transition des groupes Va, VIa, VIIa et VIII de la classification périodique des éléments est au moins un des élements choisis dans le groupe forme par le Ni, Cr, Mn, Fe, Co et V.

**15.** Procédé de préparation d'un corps fritté en nitrure d'aluminium conforme à la revendication 7 dans lequel le corps a une conductivité thermique au moins égale à 65 W/(m.K).

# FIG. 1

# FIG. 2

# FIG. 3

# FIG. 4